(19) Europäisches Patentamt
European Patent Office
Office européen des brevets

(11) **EP 3 912 523 A1**

(12) **EUROPEAN PATENT APPLICATION**

(43) Date of publication:
**24.11.2021 Bulletin 2021/47**

(51) Int Cl.:
***A47J 31/46*** *(2006.01)*

(21) Application number: **21168789.2**

(22) Date of filing: **16.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.05.2020 IT 202000011593**

(71) Applicant: **Cappellini, Davide**
**26029 Soncino (CR) (IT)**

(72) Inventor: **Cappellini, Davide**
**26029 Soncino (CR) (IT)**

(74) Representative: **Bonatto, Marco**
**Barzanò & Zanardo Milano S.p.A.**
**Via Borgonuovo, 10**
**20121 Milano (IT)**

(54) **APPARATUS AND PROCESS FOR PREPARING HOT BEVERAGES SUCH AS COFFEE, TEA, TISANES AND OTHER INFUSIONS**

(57) The apparatus (1) according to the invention for preparing hot beverages such as coffee, tea, tisanes and other infusions comprises a pump (13), a first (3) and a second fluid heater (5, 20) each arranged for heat a fluid to be treated such as water. The second fluid heater (5, 20) comprises a continuous flow heater (51) arranged for heat the fluid to be treated which is heated in and comes from the first fluid heater (3). The first fluid heater (3) comprises a pre-heating tank (7) arranged for contain and accumulate fluid to be treated. The pump (13) is arranged for increase the pressure of the fluid to be treated coming from the pre-heating tank (7) and directed towards the second fluid heater (5). It allows to greatly expand the range of infusions which a coffee machine can prepare and to use a water tank at ambient pressure.

Fig.1

## Description

## Field of the invention

The present invention relates to an apparatus and a method for preparing beverages such as coffee, tea, tisanes and other infusions.

## Background

Today's professional coffee machines, i.e., in service for example in bars, restaurants and canteens, store the water needed to prepare coffee, tisanes and other hot beverages in a heated and pressurized tank.

The instantaneous high -thermal- powers required by a coffee machine for quickly preparing beverages raised the pressure and temperature to relatively high levels.

Hot water for coffees is stored in such tanks, thus increasing the risk of accidents, typically tank explosions.

The pressure inside the tank -or boiler if you willis of several atmospheres, often between **9-12** atmospheres, while the temperature is often between **90-120°C.**

Accidents have occurred, with several people having been injured.

The pressure tanks -or boilers if you will- of current coffee machines can be of the monophasic or biphasic type.

The author of the present invention has observed that eliminating the pressurized boiler of coffee machines would be desirable, resulting in the following advantages:

- considerable improvement of the intrinsic safety of the machine, with particular reference to the risk of explosion of the boiler/tank;
- improved food safety; the release of heavy metals initially contained in metallic materials into water depends on temperature, pressure, duration of contact between the metal and water or condensation;
- considerable constructive simplification of the hydraulic circuit, being able to eliminate several components and simplify the materials used for the circuitry;
- easier machine maintenance and accessibility;
- less complex and costly machine certification procedures, as it is not necessary to certify resistance to (at least) high pressures and explosions.

Publication US2016/0249761A1 describes a machine for preparing and dispensing espresso coffee comprising a pre-heating boiler **1,** a pump **2** and a dispensing unit **3.**

It can be deduced that the pressure in the boiler **1** during operation is well above atmospheric pressure:

- by the presence of the bypass **14** of the pump **2;**
- by the fact that US2016/0249761A1 teaches to implement, with the pump **2** deactivated, both a preinfusion step dispensing pre-heated water in a predetermined time or for a predetermined volume of water, in which the coffee powder contained in the filter is only wetted, and a post-infusion step at constant pressure and for a predetermined volume of water; in the post-infusion step, the pump **2** is switched off again for the time required to reach the programmed dose in weight of the product dispensed; since, in order to prepare espresso coffee, the water must have a minimum pressure of about 1 relative bar to pass through and impregnate the amount of coffee powder, this confirms that the boiler **1** is at a much higher pressure than atmospheric pressure or **0.5** relative bar.

Also the fact that the conduit connecting the boiler **1** and the pump **2** in Figure **1** of US2016/0249761A1 is depicted so as to leave the boiler **1** with an initially vertical section, and that this vertical section seems to extend in the boiler **1** until below the surface of the liquid bath, at least suggests the presence of an inlet pipe or hose which immerses itself in the liquid bath and withdrawn it by lifting, again implying that the boiler **1** is of the biphasic pressure type; for that which has been previously set forth, the pressure in the boiler **1** must be equal to or greater than **1** relative bar.

The dispensing unit **3** is provided with a heating resistor **7,** possibly an electric heater, but US2016/0249761A1 does not provide any indication from which to infer that it can be considered a continuous flow heater according to the definition given later in the present description, nor from which it can be inferred that it further raises the temperature of the water already preheated by the boiler **1;** in fact, it could serve only to maintain the water contained in the chamber in which the heater **7** is housed at a temperature which is not too low.

Furthermore, US2016/0249761A1 teaches to preemptively soak the coffee blend for a few seconds with water pre-heated to an optimal temperature coming from the boiler **1** and not pressurized by the pump **2;** this at least suggests that the second heater **7** does not further heat the water coming from the boiler **1**

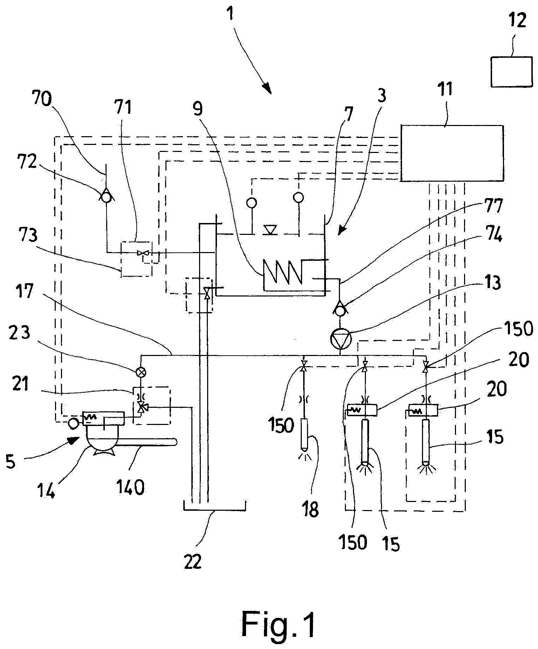

Publication US2017/0290458A1 describes multiple versions of a machine and method for preparing beverages; the machine versions related to Figures 1-**53** are conceived for preparing coffee while the versions in Figures **54-69** are conceived for preparing carbonated beverages.

The versions of the machine for preparing coffee are provided with a first tank **14** lacking heaters capable of heating the water contained therein, a second pressurized tank **16** provided with heating elements **56** and a pump **12** arranged to send towards the second tank **16** the water contained in the first tank **14;** the machine lacks continuous flow heaters or other heating elements arranged to further heat the water coming from the second tank **16**.

Publication US2015/0374168A1 describes a coffee brewing apparatus comprising a pump **4**, a boiler **1** provided with a first heater comprising a heat exchanger **5** and a dosing unit **13** in turn comprising a second water heater **12**.

The pump **4** does not increase the pressure of the water coming from the boiler and directs it to the second heater **12**, but increases the pressure of the water coming from an external source **2**, providing it to the boiler 1.

The water heated by the heat exchanger **5** would then seem to be pushed towards the second heater **12** by the pressure created by the pump **4** in the heat exchanger **5** or more exactly upstream thereof; this implies that the boiler **1** and the heat exchanger **5** are at a pressure above atmospheric pressure.

Furthermore, US2015/0374168A1 teaches that the boiler **1** is arranged for generating both hot water and vapour; this implies that it is a biphasic boiler which can only operate at pressures well above ambient pressure and, again according to what has already been set forth with respect to US2016/0249761A1**,** equal to or greater than **1** relative bar.

Furthermore, US2015/0374168A1 does not teach how to obtain the second heater **12** as a continuous flow heater.

An object of the present invention is to obviate the above-mentioned drawbacks of the state of the art and in particular to provide an apparatus for preparing hot beverages such as coffee, tea and other tisanes and infusions, which has greater intrinsic safety, with particular reference to the risks of explosion and/or food contamination, and/or is easier to maintain than the currently known coffee machines.

## Summary of the invention

Such an object is achieved, in a first aspect of the present invention, by an apparatus for preparing hot beverages such as coffee, tea, tisanes and other infusions having the features according to claim **1**.

In a second aspect of the invention, such an object is achieved with a method having the features according to claim **10**.

According to a particular embodiment, in such a method the second desired temperature is between **93-98°C**.

Further features of the invention are the subject matter of the dependent claims.

The advantages attainable with the present invention shall become more readily apparent, to the person skilled in the art, by the following detailed description of a particular, non-limiting example of embodiment, illustrated with reference to the following schematic figures.

## List of Figures

Figure **1** shows a functional diagram of an apparatus for preparing hot beverages according to a first particular embodiment of the invention;
Figure **2** shows a side view, partially in section, of the second fluid heater and portafilter of the apparatus of Figure **1**;
Figure **3** shows a side view of the pre-heating tank of the apparatus of Figure **1**;
Figure **4** shows a plan view of the heat exchanger of the second fluid heater of the apparatus of Figure **1**;
Figure **5** shows a cross-section of the heat exchanger of

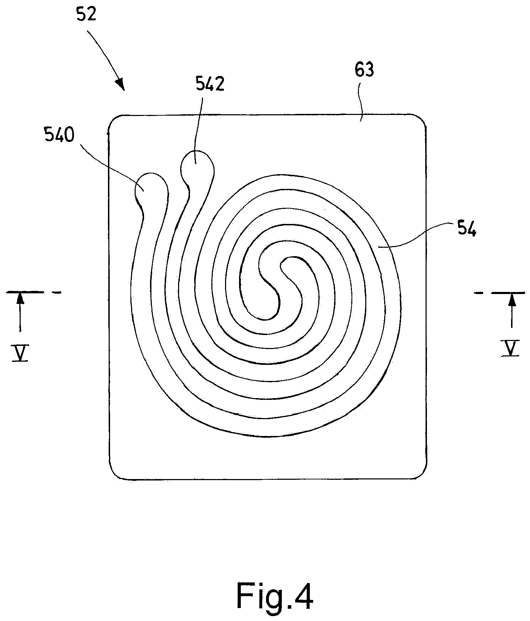

Figure **4,** according to the cross-sectional plane V-V; and

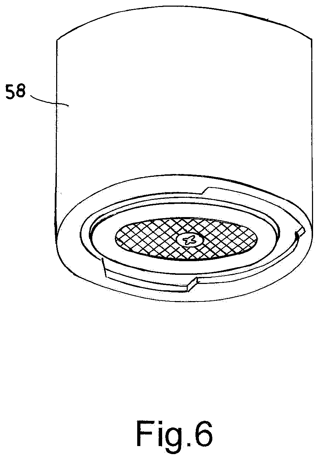

Figure **6** shows a perspective view of the dispenser fixing body of the apparatus of Figure **1**;

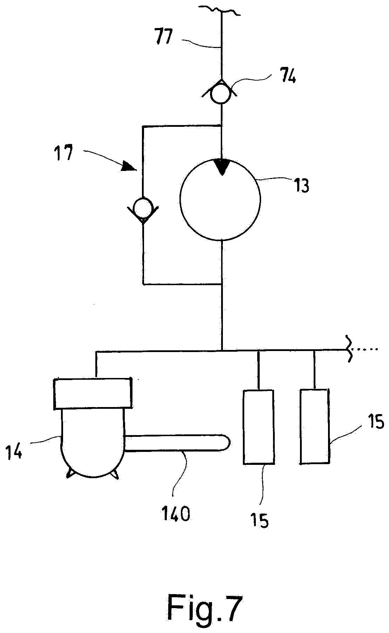

Figure **7** shows a fluidic and functional diagram of the pump and relative bypass circuit of the apparatus of Figure **1**;

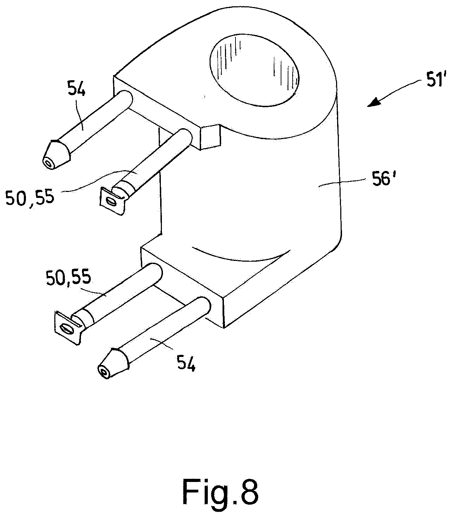

Figure **8** shows a perspective view of a heater of the "thermoblock" type usable in an apparatus for preparing hot beverages according to a second particular embodiment of the invention.

## Detailed description

Figures **1-7** relate to an apparatus for preparing hot beverages such as coffee, tea, tisanes and other infusions according to a first particular embodiment of the invention, indicated by the overall reference numeral **1.**

The apparatus **1** comprises a first **3** and a second fluid heater **5.**

Each of such heaters **3, 5** is arranged for heating a fluid to be treated such as water and/or water vapour.

The second fluid heater **5** comprises a continuous flow heater **51, 51'** arranged for heating the fluid to be treated which is heated in and comes from the first fluid heater **3**.

Advantageously, the first fluid heater **3** comprises a pre-heating tank **7** arranged to contain, store and heat the fluid to be treated

The pre-heating tank **7** can be filled with water or other fluid to be treated for example through the supply conduit **70,** which may be provided with a non-return valve **72**.

Preferably, the pre-heating tank 7 is provided with a fill valve **71** and/or a drain valve **73**, which may for example be solenoid valves.

The fill valve **71** is arranged for controlling the inflow of water or other fluid to be treated into the preheating tank **7;** for this purpose, it may be arranged to open, close and/or throttle the supply conduit **70** (Figure **1**) .

The drain valve **73** is arranged for controlling the outflow of water or other fluid to be treated from the pre-heating tank **7**, for example to the drain tank **22**.

The pre-heating tank **7** is arranged to contain a quantity of water or other fluid to be treated equal to or greater than **1** litre, possibly equal to or greater than **5**, **10**, **15**, **20** litres.

The pre-heating tank **7** is arranged to contain a quantity of water or other fluid to be treated equal to or less than **30** litres, optionally equal to or less than **20**, **15**, **10**, **5** litres.

The fluid to be treated may for example be liquid water.

The pre-heating tank **7** is advantageously provided with a first heating system **9** arranged for heating the water and maintaining it at a first desired temperature preferably equal to or greater than **75°C**, more preferably equal to or greater than **77°C**, more preferably equal to or greater than **80°C**, more preferably equal to or greater than **85°C**, more preferably equal to or greater than **90°C**, more preferably equal to or greater than **93°C**, and even more preferably equal to or greater than **95°C**.

The first desired temperature is preferably equal to or less than **96°C** or **93°C**.

The above temperatures are advantageously maintained within a tolerance preferably equal to or greater than +/- **3°C**.

The first **9** and the second heating system **50** -the latter described in more detail below- can each comprise, for example, an electrical resistor arranged for heating the water or other fluid to be treated by means of the Joule effect; alternatively, it may comprise, for example, a serpentine conduit **54** or other heat exchanger internally passed by a suitable heat transfer fluid which is hotter than the fluid to be treated contained in the pre-heating tank **7**.

Preferably, the apparatus **1** comprises a temperature control system **11** programmed or otherwise arranged for controlling the electrical resistor or other first heating system **9** so as to maintain the temperature of the fluid to be treated contained in the tank **7** at a temperature as close as possible to the first desired temperature or in any case within a suitable temperature range around the first desired temperature.

For this purpose, the temperature control system **11** may comprise, for example, a microprocessor circuit and/or a thermostat or other first logic unit.

Preferably, the apparatus **1** further comprises a pump **13**, for example of the gear, lobe or other positive displacement pump type.

According to an aspect of the present invention, the pump **13** is arranged for increasing the pressure of the water or other treatment fluid coming from the pre-heating tank **7**, bringing it, in the conduits downstream of the pump **13** itself, to values for example equal to or greater than **7** bar, **9** bar, **10** bar, **12** bar relative to atmospheric pressure.

The adoption of a pump downstream of the pre-heating tank **7** no longer makes it necessary for the latter to have high pressures during operation.

In fact, advantageously the pre-heating tank **7** is arranged for maintain the fluid to be treated which it contains at a pressure relative to atmospheric pressure equal to or less than **0.5** bar, more preferably equal to or less than **0.3** bar, more preferably equal to or less than **0.2** bar, more preferably equal to or less than **0.1** bar and even more preferably equal to or less than **0.05** bar, **0.03** bar or **0.01** bar relative to atmospheric pressure.

Preferably, the pre-heating tank **7** is arranged for maintaining the fluid to be treated which it contains at a pressure relative to atmospheric pressure between +- **0.1** bar and even more preferably between +- **0.05** bar, +-**0.03** bar or +- **0.01** bar.

In this regard, the pressure at which the pre-heating tank **7** maintains the fluid to be treated can be, for example, the relative pressure measured at the free surface of the bath of fluid to be treated, if any, or the average relative pressure inside the fluid to be treated, or even the relative pressure measured at the bottom of the tank **7** or, in any case, at the deepest point of the bath of the fluid to be treated.

Also for this purpose, the pre-heating tank **7** can be provided with a pressure relief valve (not shown) arranged for discharging water vapour, air or other gases or liquids when the internal pressure in the tank **7** reaches or exceeds a maximum allowable pressure threshold.

More preferably, the pre-heating tank **7** is advantageously in constant fluidic communication with the atmosphere outside the tank **7** itself, for example provided with sufficiently large conduits or other passages which put the interior thereof with the external atmosphere in fluidic communication with the external atmosphere without creating excessive pressure differences, more preferably by maintaining the interior of the tank **7** substantially at the atmospheric pressure of the environment outside the apparatus **1**.

In this regard, the absolute atmospheric pressure at which the inside of the tank 7 is maintained is preferably measured at the free surface of the liquid to be treated.

Also for this purpose, the pre-heating tank **7** can comprise a vessel open at the top in the form of a basin or bucket (Figure **1**) .

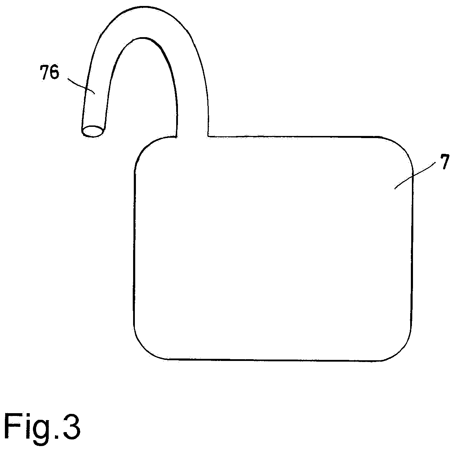

Alternatively, the pre-heating tank **7** can comprise a vessel also closed at the top and provided with a pipe or other vent conduit or air intake **76** for example bent in a U-shape (Figure **3**) or S-shape so as to substantially form a siphon.

Said vent conduit or air intake **76** is advantageously arranged for allowing water vapour to condense before it exits the conduit **76** itself into the external environment, thereby avoiding unduly increasing the moisture content of said environment.

Preferably, the vent conduit or air intake **76** has through sections of a size which maintains the pressure inside the tank **7** substantially equal to the atmospheric pressure outside the tank **7** and/or the apparatus **1**.

Reducing the pressure reigning in the tank **7** eliminates or at least significantly reduces the risk of explosions or other accidents caused by the tank **7** itself as well as the cost of manufacturing, certifying, and periodically overhauling a pressurized tank; it also reduces the extraction of heavy metals from metallic materials which can form the tank **7** itself or the conduits of the apparatus **1**.

The pump **13** is preferably arranged for supply, preferably by increasing the pressure thereof, the second fluid heater **5** and/or the one or more possible nozzles **15** with the fluid to be treated coming from the first fluid heater **3**.

The pump **13** can be provided with a bypass conduit **17**, either internal or external to the pump itself, to put the pump delivery and suction in fluidic communication, for example to avoid excessive overpressure (Figure **7**).

The bypass **17** can be calibrated to open, for example, when the delivery of the pump **13** reaches a pressure threshold of about **12-15** bar.

Preferably, a non-return valve **74** is arranged along the conduit **77** fluidically connecting the pre-heating tank **7** and the pump **13**.

Preferably, the apparatus **1** further comprises one or more vapour dispensing nozzles **15** and/or one or more water dispensing nozzles **18**.

Each water dispensing nozzle **18** is arranged for dispensing water coming from the pump **13** or in any case from the pre-heating tank **7**, preferably without having been subsequently heated by further heaters.

The hot water dispensed by each nozzle **18** can be used to prepare, for example, tea or tisanes.

Each vapour dispensing nozzle **15** is arranged for dispensing water vapour eventually obtained by heating with further heaters **20** -such as instantaneous heaters, also of known type- the water coming from the pump **13** or in any case from the pre-heating tank **7**, preferably pressurized by the pump **13**.

Preferably, each vapour dispensing nozzle **15** is associated with a corresponding heater **20**, returned for example immediately upstream thereof or in any case fluidically interposed between the nozzle **15** itself and the pump **13**.

Said heater **20** is a second example of the aforesaid second fluid heater.

The vapour-preferably saturated- dispensed by each nozzle **15** can be used, for example, to froth milk to prepare cappuccinos or simple foamed hot milk to be served directly.

Each vapour dispensing nozzle **15** can be provided, for example, with a corresponding solenoid valve **150** which reversibly opens and closes it, respectively allowing and preventing the release of the vapour.

It is thereby possible to supply abundant water or vapour, for example to prepare tisanes - typically energy-intensive preparations for professional coffee machines - or froth milk for cappuccino, reducing the installed or necessary power during the operation of the second fluid heater **5** and providing better quality vapour, for example because it is drier.

This is because through precise sizing of the heater **5** and precise regulation of the flow, it is possible to avoid the dragging effect typical of the currently known biphasic boilers.

Preferably each solenoid valve **150**, the fill valve **71**, the drain valve **73** and/or each heater **20**, the first **3** and the second fluid heater **5** is controlled by the first **11** and/or second logic unit **12**.

"Continuous flow heater" in this description means an apparatus capable of heating the water to be treated which passes through or otherwise comes into contact therewith at a speed **VR** equal to or greater than **5** degrees Celsius/second, more preferably equal to or greater than **10** degrees Celsius/second, more preferably equal to or greater than **15** degrees Celsius/second and even more preferably equal to or greater than **20** degrees Celsius/second.

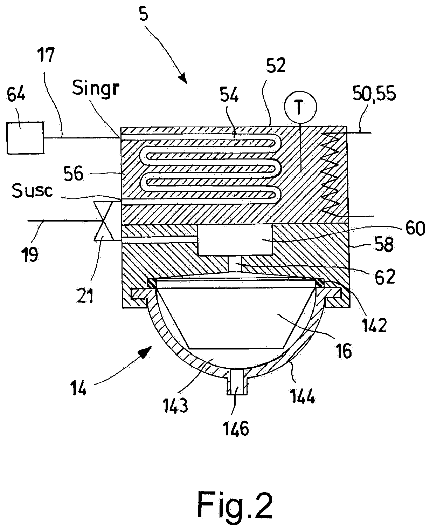

Such a speed **VR** rate can be calculated as the ratio between the temperature difference $\Delta T$ which a particle of water undergoes between the inlet section SIngr and the outlet section SUsc of the continuous flow heater **51, 51'** and the crossing time TA which the particle takes to flow through the path inside the heater **51, 51'** or in any case in contact therewith, between the inlet section SIngr and the outlet section SUsc (Figure **2**).

In other words, the heating speed **VR** can be calculated with the following formula:

$$\mathbf{VR} = \Delta T \; / \; TA$$

Preferably, the continuous flow heater **51, 51'** of the second fluid heater **5** is arranged for heating the water flowing through and/or contained in the continuous flow heater **51, 51'** itself by transferring thereto a thermal power equal to or greater than **21000** Watt/(litres/second), i.e., **21000** Watt for a flowrate unit (litres/second) of the fluid to be treated crossing or otherwise flowing through the continuous flow heater **51, 51'**.

More preferably, said continuous flow heater **51, 51'** is arranged for heat the water flowing through and/or contained in the continuous flow heater **51, 51'** itself equal to or greater than **40000** Watt/(litres/second), and even more preferably equal to or greater than **80000** Watt/(litres/second).

The continuous flow heater **51, 51'** or other second fluid heater **5** advantageously comprises a second heating system **50** and a heat exchanger **52**, the latter being arranged for heating the fluid to be treated with the heat produced by the second heating system **50** (Figures **2, 4, 5**).

The second heating system **50** can comprise, for example, one or more electric resistors **55** arranged for heating by the Joule effect the water or other fluid to be treated which flows through the heat exchanger **52** (Figures **4, 5, 8**).

Said heat exchanger **52** preferably comprises an exchanger conduit **54** arranged for being crossed by the water to be treated coming from the pump **13,** if any, or in any case from the first fluid heater **3**.

The exchanger conduit **54** can be shaped, for example, like a coil or a spiral (Figure **2, 4**).

Such as for example in the embodiment of Figure **2,** the heat exchanger **52** can comprise a relatively thick and solid block **56** , preferably of aluminium, brass, stainless steel, titanium or other metallic material, in which the heat exchanger conduit **54** is formed.

Such as for example in the embodiment shown in Figure **8** , the continuous flow heater **51'** can be of the so-called *"thermoblock"* type and comprise a main heat exchange body **56'** in which the second heating system **50** -such as a resistor arranged for heating by means of the Joule effect- and the exchanger conduit **54** are incorporated.

The exchanger conduit **54** can comprise, for example, a tube made of a metallic material -for example stainless steel- for example bent into a coil, a spiral or a helix.

The main heat exchange body **56'** incorporates the second heating system **50** and the exchanger conduit **54** for example because it has been formed directly thereon for example by die casting, moulding, forging, or other hot moulding process, or even by **3**D printing or other additive manufacturing techniques, so as to maximize the contact and heat conduction surface area between the main body **56',** the second heating system **50,** and the exchanger conduit **54**.

Alternatively, each resistor **55** and each exchanger conduit **54** can be recessed and coupled through more or less light forcing into suitable grooves and cavities previously obtained -for example by moulding or milling in the block **56, 56'**.

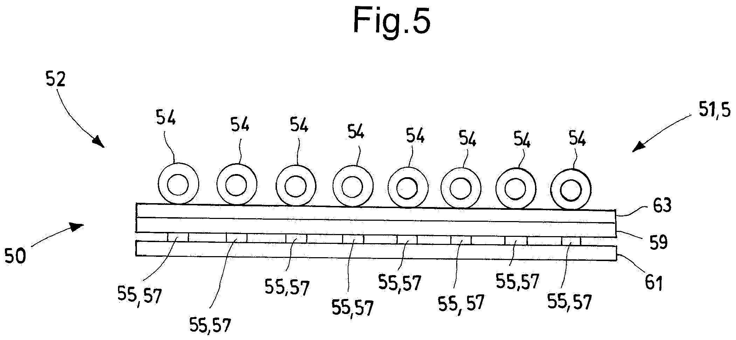

The references **540, 542** indicate possible embodiments of the ports, fittings or inlet and outlet sections of the exchanger conduit **54** (Figure **4, 5**).

The heat exchanger **52** can comprise a heat diffuser **63** having the purpose of promoting and increasing the transmission of heat between the second heating system **50** and the exchanger conduit **54**.

The thermal diffuser **63** preferably has the form of a plate, shell or other relatively thin layer, and can have an overall planar and/or variously curved form, for example single or double curved.

The exchanger conduit **54,** the heat diffuser **63** and more generally the heat exchanger **52** are preferably made of a material with relatively good thermal conductivity, for example aluminium, copper, brass, bronze, stainless steel, titanium or other metallic material.

The second heating system **50** can advantageously be of the thick film type (Figure **5**).

For this purpose, the second heating system **50** preferably comprises a first **59** and more preferably also a second dielectric layer **61**.

Still in this regard, each electrical resistor **55** comprises one or more conductive tracks **57**.

Preferably at least part, and more preferably all, of the conductive tracks **57** are made of an electrically conductive material fixed to or otherwise applied to the first **59** and/or second dielectric layer **61,** if any, by one or more of the following techniques: screen printing, sintering, inkjet, sputtering or cathodic sputtering, ionic vaporization, spray painting, electrodeposition, **3**D printing, fused deposition modelling, or other additive manufacturing techniques.

Such an electrically conductive material can comprise for example a metalloceramic material (cermet) such as tantalum nitride (TaN), ruthenium oxide (RuO), lead oxide (PbO) bismuth ruthenate (BiRu), alloys or other solid mixtures of nickel-chromium (NiCr), bismuth iridiate (Bi$_2$Ir$_2$O$_7$) or more generally a ceramic material.

Further examples of electrically conductive materials adapted to make the conductive tracks **57** are described for example in patent application EP0250905A2**.**

The first **59** and/or the possible second dielectric layer **61** are preferably in the form of plates, sheets, shells or other relatively thin layers, and can have an overall shape for example planar or variously curved, for example single or double curved, can be made for example of suitable ceramic or glass materials, or of suitable enamels.

One purpose of the first **59** and/or the possible second dielectric layer **61** is to electrically insulate the conductive tracks **57** from the heat exchanger **52**.

Advantageously, to increase the heat exchange between the second heating system **50** and the heat exchanger **52,** at least one of the first **59** and/or the possible second dielectric layer **61** are in contact with the exchanger conduit **54** or the heat diffuser **63**.

Advantageously, again to increase the heat transfer, one out of the first layer **59** and/or the possible second dielectric layer **61** extend over most - preferably at least 50%, more preferably at least 75% of the major surface area of the heat diffuser **63,** and/or are in contact with and/or extend over most of the length of the exchanger conduit **54**.

For this purpose, the spiral, coil or other path of the exchanger conduit **54** has a substantially thin overall shape, preferably arranged for forming substantially and overall a thin planar layer (Figure **5**) or a single or double curved shell shape.

Preferably, the second fluid heater **5** is arranged for bringing the fluid to be treated from the first fluid heater **3** to a second desired temperature preferably equal to or greater than **75°**C**,** more preferably equal to or greater than **80°**C or **84°**C**, 88°**C**, 90°**C**, 93°**C**,** to **95°**C**, 96°**C**, 98°**C.

Possibly the second desired temperature is preferably equal to or less than **99°**C**,** or **96°**C or **93°**C or **90°**C.

Preferably the second desired temperature is greater than the first desired temperature, for example by no more than **2°** degrees, more preferably by no more than **3°**C and more preferably by no more than **5°**C and even more preferably by no more than **7°**C or **10**C.

Always for such a purpose, the temperature control system **11** advantageously comprises one or more temperature sensors each arranged for detecting the temperature of the water or other fluid to be treated contained in the pre-heating tank **7** and/or in the second fluid heater **5,** for example in the exchanger conduit **54** and/or in the possible pre-infusion chamber **60** of the portafilter.

The first and/or the second logic unit **12** are arranged for receiving detections from such temperature sensors and control the apparatus **1** based on such said detections.

Preferably, the apparatus **1** further comprises a portafilter **14** which in turn forms a seat for housing, or otherwise fixing, the filter **16** containing for example ground coffee, tea leaves or other plants or other plant parts from which to obtain infusions or other beverages.

The filter **16** can be arranged for being filled in the moment with the solid ingredient or (Figure **2**) can be in the form of a so-called pod or other previously prepared package, and possibly sealed and/or disposable, containing the solid ingredient.

Such a pre-packaged pod **16** can be of the type described for example in Italian patent application no. IT102010901806672**,** IT102003901114308, IT102016000009303**,** international patent application WO2014/067507A2 or European patent application EP2146608A1.

The portafilter **14** is preferably provided with a handle **140,** preferably of a substantially elongated shape.

The second fluid heater **5** preferably comprises a dispenser fixing body **58** which in turn forms a head or other dispenser fixing seat **14** (Figure **6**)**.**

Such a fixing head is often referred to as a "campana" in the Italian tecnical jargon and as a "group head" in the English technical jargon.

Preferably, the dispenser fixing body **58** substantially has the shape of a solid block, for example overall cylindrical, made for example of metallic material, preferably brass, stainless steel, titanium, aluminium or alloys thereof or other metal having good thermal conductivity.

The dispenser fixing body **58** can advantageously be fixed to the heat exchanger **52** -for example to the heat diffuser **63** thereof-or to the second heating system **50,** for example in particular to the first **59** and/or second dielectric layer **61** thereof.

In the dispenser fixing body **58,** a pre-infusion chamber **60** is advantageously obtained, arranged for being supplied with the fluid to be treated coming from the exchanger conduit **54.**

The chamber **60** is useful to ensure a progressive increase of the pressure front of the coffee preparation water.

Between one dispensing and the next one, the pre-infusion chamber **60** is preferably empty; for this purpose, it is arranged downstream of the dispensing solenoid valve **64.**

Always for this purpose, the pre-infusion chamber **60** is in fluidic communication with the exchanger conduit **54** and more generally with the heat exchanger **52.**

Preferably, the second fluid heater **5** is provided with a drain conduit or port **19,** which allows to evacuate any excess water or other fluid to be treated coming from the heat exchanger **52,** the dispenser fixing body **58** -for example from the pre-infusion chamber **60-** and/or the portafilter **14** (Figure **2**).

Preferably, the second fluid heater **5** is provided with a valve -possibly a solenoid valve- **21** arranged for reversibly open and close the drain conduit or port **19** putting it in fluidic communication for example with the environment outside the apparatus **1** or with a suitable drain tank **22** (Figure **1, 2**).

The drain conduit or port **19** is particularly advantageous, for example, to empty -possibly completely- the exchanger conduit **54** and, more generally, the conduits downstream of the pre-heating tank **7** and/or the non-return valve **74** and/or the pump **13,** or even the pre-infusion chamber **60** or other chambers or conduits inside the dispenser fixing body **58** or the portafilter **14** from any residual water or other fluid to be treated when the apparatus **1** is not about to prepare new infusions in the immediate future; draining the residual water prevents it from, for example, creating microcorrosion phenomena or extracting heavy metals from the conduits and other metal parts of the apparatus **1.**

The portafilter **14** is preferably provided with a filter holder seat **142** arranged for accommodating and holding the filter **16** in position.

The filter holder seat **142** is advantageously arranged for positioning the filter **16** in an infusion chamber **143,** which is preferably arranged for being fed with the fluid to be treated coming from the second fluid heater **5,** for example from the exchanger conduit **54** and/or from the possible pre-infusion chamber **60.**

A purpose of the infusion chamber **143** is to ensure that the ground coffee is gently wetted before reaching the calibrated pressure of the bypass **17** of the pump **13** so as to avoid the formation of preferential pathways of the ground coffee mass -i.e., in the so-called "briquette"- ("pannello" in the Italian technical jargon), pathways which would cause the coffee panel to be utilized in a worse manner.

The filter holder seat **142** and/or the infusion chamber **143** can be formed, for example, in a cup **144** attached to one end of the handle **140.**

Advantageously, the first **56** and the dispenser fixing body **58** are fixed to each other so as to promote the transmission of heat therebetween by conduction.

For example, they are in mutual contact over a relatively large area, for example equal to or greater than **8** square centimetres, and more preferably equal to or greater than **10** square centimetres, even more preferably equal to or greater than **13** square centimetres.

Said surface area is preferably equal to or less than **20** square centimetres, more preferably equal to or less than **18** square centimetres, even more preferably equal to or less than **15** square centimetres.

Thereby the second heater **5** maintains the filter **16** and the portafilter **14** at the right temperature, preventing the first coffee or other infusion dispensed after a long rest period of the apparatus **1** from being too cold.

The cup **144** or, more generally, the portafilter **14** is arranged for reversibly fix to the dispenser fixing body **58** or, more generally, to the second fluid heater **5**, for example by means of a bayonet coupling, a threaded coupling or other quick coupling and release system.

Advantageously, the apparatus **1** is arranged so that, during normal operation, the filter **16** and the solid ingredient possibly contained therein face a portion of the dispenser fixing body **58** or are in any case proximal thereto and therefore heated thereby, thus helping to maintain the temperature of the entire portafilter **14**, contributing to prevent the first coffee or other infusion dispensed after a long rest period of the apparatus **1** from being unpleasantly too cold.

The infusion **143** is preferably provided with an exit conduit or port **146** through which the coffee, tea, tisane, other infusion or other beverage can exit the chamber **143** once ready and for example drip or otherwise fall into a cup, mug, glass, bowl or other suitable crockery.

The apparatus **1** preferably comprises a second logic unit **12** -in turn comprising for example a microprocessor circuit- arranged for monitor and control the operation of the apparatus **1** itself, controlling for example the operation of one or more, and for example all, of the following components: the first **3** and/or the second fluid heater **5,** the first **9** and/or the second heating system **50,** the temperature control system **11,** the pump **13,** the one or more nozzles **15.**

The apparatus **1** is preferably provided with a volumetric meter **23** arranged for measuring the flow of water or other fluid to be treated directed towards the second fluid heater **5** so as to ensure the dispensing of the preset dose of coffee (Figure **1**).

The meter **23** is preferably arranged along the conduit **17,** preferably downstream of the pump **13** and upstream of the valve **21**. Preferably, the meter **23** is controlled by the first **11** and/or second logic unit **12**.

An example of possible operation and use of the machine **1** shall now be described.

When the apparatus **1** is active but waiting to be used, the first heater **9** can maintain the water -or other liquid to be treated contained in the pre-heating tank **7** at the aforementioned first desired temperature, for example equal to or greater than **77**°C**, 80**°C**, 93**°C or **95**°C**.**

The exchanger conduit **54** is preferably empty of water, vapour or other fluid to be treated.

The second heating system **50** or, more generally, the second fluid heater **5** preferably heats the filter holder seat **142** so as to maintain it at a predetermined maintenance temperature, for example between **75-85**°C or between **80-85**°C**.**

An end user such as a bartender or a private user, depending on whether the apparatus **1** is in operation at a bar, restaurant, canteen or other public place or is installed in a private home, in order to prepare an infusion such as a tea or other tisane can for example select the desired beverage by means of a plurality of keys arranged for example to form a keyboard, a touch screen or other user interface (not shown) which allows access for example to virtual selection keys or a selection menu.

The pump **13** is activated, pressurizing the water or other fluid to be treated coming from the pre-heating tank and sending it to one of the dispensing nozzles **18** which, for example, following the opening of the relative solenoid valve **150,** releases it into a cup or glass, at a temperature substantially equal to the temperature at which the water in the tank **7** is maintained, a temperature which is advantageously lower than that needed to prepare a coffee.

In this first mode of use, the conduits **17** and **54** are advantageously emptied of water, avoiding microcorrosion and heavy metal extraction phenomena from the metals of the apparatus **1** and reducing the electrical and thermal energy required to maintain the dispenser fixing body **58** and the portafilter **14** at the desired maintenance temperature.

To prepare a coffee, the end user places the pod, capsule or other filter **16** in the filter holder seat **142** and/or in the infusion chamber **143,** fixes the portafilter **14** for example to the dispenser fixing body **58** or more generally to the second fluid heater **5,** for example by means of the aforementioned bayonet coupling system or other quick coupling and release system, and then starts the preparation cycle of the beverage, for example an espresso coffee.

The end user can then select the desired beverage for example through the aforementioned user interface.

Upon receiving information and/or commands from said user interface, the second logic unit **12** activates the pump **13** causing it to withdraw water or other fluid to be treated from the tank **7** and bring it to the second fluid heater **5** at the required pressure.

The conductive tracks **57** of the continuous flow heater **51** are supplied with current and heat the first **59** and/or the second dielectric layer **61** almost instantaneously.

One or both of said dielectric layers **59, 61** heat in turn and likewise almost instantaneously the heat diffuser **63,** for example in the form of a plate, and/or directly the exchanger conduit **54.**

The valve **21** keeps the drain conduit or port **19** closed, so that the pre-heated water or other fluid to be treated flows through, filling it, for example the exchanger conduit **54** and is further and almost instantaneously heated up to the desired infusion temperature or, in any case, to the aforementioned second desired temperature.

The second heater **5** makes the water or other fluid to be treated which has been pre-heated by the first fluid heater **3** increase in temperature, bringing it to the suitable temperature for preparing the chosen beverage, for example an espresso coffee, bringing the fluid for example from **92**°C up to **94**°C.

The water or other fluid to be treated heated by the second heater **5** then reaches, for example at the second desired temperature, the chamber **60** and subsequently, for example through the conduit **62,** the filter **16,** where by wetting the coffee powder or other solid ingredient contained therein, it forms the final beverage, which outflows -for example by dripping or otherwise flowing through the exit conduit or port **146** - from the portafilter **14.**

The second desired temperature will be, for example, higher to prepare a Neapolitan-style espresso, obtained from a very roasted coffee blend, and lower to prepare, for example, a coffee according to Eastern European customs.

From the exit port or other conduit **146,** or more generally from the portafilter **14,** the beverage can reach -for example by dripping- the destination cup, mug, glass or other crockery.

When the coffee preparation is over, the logic unit **12** or the end user stops the pump **13** and makes the valve **21** open the drain conduit or port **19** , allowing the water or other fluid to be treated to drain from the conduits **17, 54,** leaving them empty while waiting for a new, not immediate, use.

To produce vapour to be used, for example, to froth or heat milk, the pump **13** draws the pre-heated water from the tank **7,** increases the pressure thereof and sends it to one of the vapour nozzles **15.**

The respective heater **20** causes the water dispensed and pressurized by the pump **13** to increase in temperature, bringing it to the dispensing temperature, i.e., to the second desired temperature (at least for vapour), for example to a temperature between **105-125**°C.

The nozzle -also known as a wand- **15** then releases the vapour, for example into a cup or mug.

Having to make the water or other fluid to be treated perform a relatively small increase in temperature, the second heater **5** is capable of dispensing a wide variety of relatively hot water or other fluid flow rates and in any case of providing water or fluid to be treated at various final temperatures, i.e., desired temperatures, suitable for preparing a wide variety of infusions according to many recipes and preparation styles, for example Italian-style espresso, Neapolitan coffee, coffee creme, French-style coffee, American coffee or in the variants of Eastern Europe or Scandinavian countries.

In order for the water to make such a limited increase in temperature, the continuous flow heaters described above are particularly effective, in particular thick-film heaters, as they are able to heat the water -or other fluid to be treated- very quickly, almost instantaneously.

The continuous flow heaters described above therefore allow to considerably widen the range of infusions, especially coffee recipes, which a coffee machine can prepare by heating the water in two stages, i.e., in the pre-heating tank and then through the second fluid heater, greatly contributing to making a coffee machine or more generally apparatus **1** more versatile, agile and easy to use.

This particular choice of the first and second desired temperatures and the great versatility offered by the first **3** and especially by the second fluid heater **5** allows to use a simple room temperature, non-pressure vessel as a pre-heating tank **7,** greatly simplifying the manufacturing and certification process of the apparatus **1,** making the apparatus **1** much safer for end users.

In fact, the adoption of a vessel at ambient pressure or at relatively low overpressures as a pre-heating tank **7** considerably reduces, if not completely eliminates, the risks of explosions or other accidents, even serious ones, occurring in the past.

The elimination of pressure storage tanks also brings the following advantages:

- considerable constructive simplification of the hydraulic circuit, elimination of several components and simplification of the materials which can be used for the circuitry, with consequent improved accessibility and ease of maintenance;
- improved food safety; in fact, the release of heavy metals in the infusion water depends on the temperature, pressure and contact time of the metals with water and condensates;
- reduced energy consumption since the whole apparatus **1** operates at a lower average temperature -or overall temperature if you will- and supplies the necessary energy only when required;
- constructive and functional modularity; in fact, in professional coffee machines the portafilters are heated and maintained at temperature by a single boiler; therefore, in order to increase the number of portafilters it is necessary to adopt a longer boiler; in an apparatus **1** according to the preceding teachings, since the portafilters **14** are heated and maintained at temperature by respective second heating systems **50** or, more generally, by respective second fluid heaters **5,** it is not strictly necessary -or, in any case, there is a much less stringent need- to increase the dimensions, in particular the length, of the pre-heating tank **7** in order to provide the apparatus **1** with a greater number of portafilters **14.**

The embodiments previously described are subject to different modifications and variations without departing from the scope of protection of the present invention.

In a third aspect thereof, the present invention relates to a second fluid heater arranged for heat a fluid to be treated such as water, water vapour, heated in a first fluid heater, and in which:

- the second fluid heater comprises a continuous flow heater arranged for heat the fluid to be treated;
- the continuous flow heater has one or more of the following features:

    C.**1**) it is arranged for heat water or other fluid to be treated which flows through it with a speed equal to or greater than **5** degrees Celsius/second, more preferably equal to or greater than **10** degrees Celsius/second, more preferably equal to or greater than **15** degrees Celsius/second, even more preferably equal to or greater than **20** degrees Celsius/second;
    C.**2**) it is arranged for heat the water or other fluid to be treated which flows through it by transferring thereto a thermal power equal to or greater than **21000** Watt/(litres/second) per a flowrate unit, measured in litres/second, of the fluid to be treated flowing through the continuous fluid heater; more preferably it is arranged for heat water or other fluid to be treated by transferring thereto a thermal power equal to or greater than **40000** Watt/(litres/second), and more preferably equal to or greater than **80000** Watt/(litres/second) per a flowrate unit of the fluid to be treated which flows through the continuous fluid heater;

- it is of the thick film type.

In a fourth aspect thereof, the present invention relates to a second fluid heater arranged for heat a fluid to be treated such as for example water, water vapour, heated in a first fluid heater, and in which:

- the second fluid heater comprises a continuous flow heater arranged for heat the fluid to be treated;
- the continuous flow heater comprises one or more electrical resistors, a first and possibly a second dielectric layer;
- each electrical resistor is arranged for heat the water or other fluid to be treated which flows through the second fluid heater;
- each electrical resistor comprises one or more conductive tracks fixed to or otherwise applied to the first and/or the second dielectric layer by one or more of the following techniques: screen printing, sintering, ink-jet, sputtering or cathodic spraying, ionic vaporization, spray painting, electrodeposition, **3**D printing, fused deposition modelling or other additive manufacturing techniques.

A second fluid heater according to the third and fourth aspects of the invention allow to provide coffee machines capable of preparing coffee and other tisanes or hot beverages according to a wide variety of recipes and preparation methods with lower energy consumption with respect to the known coffee machines.

In a fifth aspect thereof, the present invention relates to an apparatus for preparing hot beverages such as coffee, tea, tisanes and other infusions, comprising a first and a second fluid heater each arranged for heat a fluid to be treated such as for example water, water vapour, in which:

- the second fluid heater comprises a continuous flow heater arranged for heat the fluid to be treated which was heated in and comes from the first fluid heater;
- the first fluid heater comprises a pre-heating tank arranged for contain and accumulate fluid to be treated maintaining it at a pressure, relative to the atmospheric pressure, equal to or less than **0.5** bar and is arranged for heat the fluid to be treated.

Possibly in the apparatus according to the third, fourth or fifth aspect of the invention the pre-heating tank **7** is arranged for maintain a pressure, relative to atmospheric pressure, equal to or less than **0.3** bar, more preferably equal to or less than **0.2** bar.

For example every reference in this description to "an embodiment", "an example of embodiment" means that a particular feature or structure described in relation to such embodiment is comprised in at least one embodiment of the invention and in particular in a particular variant of the invention as defined in a main claim.

The fact that such expressions appear in various steps of the description does not imply that they necessarily only refer to the same embodiment.

Furthermore, when a feature, element or structure is described in relation to a particular embodiment, it is observed that it falls within the skills of the average person skilled in the art to apply such a feature, element or structure to other embodiments.

Numerical references which only differ in terms of different superscripts **21', 21", 21**[III] unless specified otherwise indicate different variants of an element with the same name.

Moreover, all details can be replaced with other technically equivalent elements.

For example, the materials used, and the dimensions, can be any according to the technical requirements.

It is to be understood that an expression of the type "A *comprises* B, C, D" or "A *is formed by* B, C, D" also comprises and describes the special case in which "A *is comprised of* B, C, D".

The expression *"A comprises an element B"* unless specified otherwise can be interpreted as *"A com-*

*prises one or more elements B".*

References to a "first, second, third, ... n-th entity" have the sole aim of distinguishing them from one another but the indication of the n-th entity does not necessarily imply the existence of the first, second ... (n-1)th entity.

The examples and lists of possible variations of this application are to be considered as non-exhaustive lists.

**Claims**

1. Apparatus **(1)** for preparing hot beverages, such as coffee, tea, tisanes and other infusions, comprising a pump **(13)**, a first **(3)** and a second fluid heater **(5, 20)** each one arranged for heating a fluid to be treated, such as water, wherein:

    - the first fluid heater **(3)** comprises a pre-heating tank **(7)** arranged for containing and accumulate fluid to be treated;
    - the pump **(13)** is arranged for increasing the pressure of the fluid to be treated arriving from the pre-heating tank **(7)** and directed towards the second fluid heater **(5)** ;

    **characterized in that:**

    - the second fluid heater **(5, 20)** comprises a continuous flow heater **(51)** arranged for heating the fluid to be treated which was heated in and comes from the first fluid heater **(3)**;
    - the pre-heating tank **(7)** is arranged for containing and accumulate fluid to be treated, maintaining it at a pressure substantially equal to atmospheric pressure and is arranged for heating the fluid to be treated; and/or
    - the pre-heating tank **(7)** is arranged for maintaining a pressure, relative to atmospheric pressure, equal to or less than **0.5** bar and is arranged for heat the fluid to be treated.

2. Apparatus **(1)** according to claim **1,** wherein the first fluid heater **(3)** is arranged for heating the fluid to be treated up to a temperature equal to or greater than a first desired temperature equal to or greater than **75**°C.

3. Apparatus **(1)** according to claim **2,** wherein the first desired temperature is equal to or less than **96**°C.

4. Apparatus **(1)** according to one or more of the preceding claims, wherein the second fluid heater **(5, 20)** is arranged for heating the fluid to be treated to a temperature equal to or greater than a second desired temperature equal to or greater than **90**°C.

5. Apparatus **(1)** according to one or more of the preceding claims, wherein the second fluid heater **(5, 20)** is arranged for heating the fluid to be treated to a temperature equal to or greater than a second desired temperature equal to or greater than **95**°C.

6. Apparatus **(1)** at least according to claim **3 or 4,** wherein the second desired temperature differs from the first desired temperature by a difference equal to or less than ten degrees Celsius.

7. Apparatus **(1)** according to one or more of the preceding claims, wherein the second fluid heater **(5, 20)** is arranged for heating the fluid to be treated to a temperature equal to or greater than a second desired temperature equal to or greater than **100°C.**

8. Apparatus **(1)** at least according to claim **6** or **7,** wherein the second desired temperature differs from the first desired temperature by a difference equal to or less than three degrees Celsius.

9. Apparatus according to one or more preceding claims, wherein the continuous flow heater **(51)** has one or more of the following features:

    - it is arranged for heating water or other fluid to be treated which flows through the same at a speed equal to or greater than **5** degrees Celsius/second;
    - it is arranged for heating the water or other fluid to be treated which flows through it by transferring thereto a thermal power equal to or greater than **21000** Watt/(litres/second) for a flowrate unit of the fluid to be treated which flows through the continuous fluid heater **(51)**;
    - it is of the thick film type.

10. Method for preparing hot beverages such as coffee, tea, tisanes and other infusions, comprising the following operations:

    S.**11.1**) providing an apparatus **(1)** having the features according to claim **1**;
    S.**11.2)** by means of the first fluid heater **(3)** heating the fluid to be treated to a first desired temperature equal to or greater than **75°C.**

11. Method according to claim **10,** comprising the operation of heating the fluid to be treated to a second desired temperature equal to or greater than **95**°C by means of the second fluid heater **(5, 20).**

12. Method according to claim **10** or **11,** wherein the fluid to be treated is water, water vapour, a mixture of water and water vapour, or an aqueous solution.

13. Method according to one or more of claims **10** to **12,** wherein the desired temperature is equal to or less than **96**°C.

**14.** Method according to claim **11,** comprising the following operations: heating the fluid to be treated to the second desired temperature by means of the second fluid heater **(5, 20),** transforming the fluid to be treated into vapour or maintaining it in the form of vapour, wherein the second desired temperature is between **105°-125°**C.

Fig.1

Fig.2

Fig.3

Fig.4

# Fig.5

EP 3 912 523 A1

58

Fig.6

Fig.7

54

50,55

50,55

54

51'

56'

# Fig.8

Europäisches
Patentamt

European
Patent Office

Office européen
des brevets

# EUROPEAN SEARCH REPORT

Application Number

EP 21 16 8789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/249761 A1 (LLOPIS FRANCESCO DANIELE [IT]) 1 September 2016 (2016-09-01) * paragraphs [0035] - [0044]; claims; figures * ----- | 1-10,12 | INV. A47J31/46 |
| X | US 2017/290458 A1 (BURROWS BRUCE D [US]) 12 October 2017 (2017-10-12) * paragraphs [0089] - [0119]; claims; figures * ----- | 1-14 | |
| A | US 2015/374168 A1 (SAMPOLI DAVIDE [IT] ET AL) 31 December 2015 (2015-12-31) * the whole document * ----- | 1-14 | |

|  | TECHNICAL FIELDS SEARCHED (IPC) |
|---|---|
|  | A47J |

The present search report has been drawn up for all claims

| Place of search | Date of completion of the search | Examiner |
|---|---|---|
| Munich | 15 October 2021 | Acerbis, Giorgio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 8789

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2021

| Patent document cited in search report | | | Publication date | Patent family member(s) | | | Publication date |
|---|---|---|---|---|---|---|---|
| US | 2016249761 | A1 | 01-09-2016 | AU | 2014336574 | A1 | 09-06-2016 |
| | | | | EP | 3057475 | A1 | 24-08-2016 |
| | | | | KR | 20160077103 | A | 01-07-2016 |
| | | | | US | 2016249761 | A1 | 01-09-2016 |
| | | | | WO | 2015055343 | A1 | 23-04-2015 |
| US | 2017290458 | A1 | 12-10-2017 | AU | 2015328261 | A1 | 20-04-2017 |
| | | | | CA | 2962617 | A1 | 14-04-2016 |
| | | | | CN | 107105919 | A | 29-08-2017 |
| | | | | EP | 3203882 | A1 | 16-08-2017 |
| | | | | JP | 2017529989 | A | 12-10-2017 |
| | | | | KR | 20170063939 | A | 08-06-2017 |
| | | | | US | 2017290458 | A1 | 12-10-2017 |
| | | | | WO | 2016057568 | A1 | 14-04-2016 |
| US | 2015374168 | A1 | 31-12-2015 | AU | 2015202632 | A1 | 21-01-2016 |
| | | | | CA | 2892207 | A1 | 27-12-2015 |
| | | | | CN | 105266592 | A | 27-01-2016 |
| | | | | EP | 2959808 | A1 | 30-12-2015 |
| | | | | ES | 2707983 | T3 | 08-04-2019 |
| | | | | JP | 6605851 | B2 | 13-11-2019 |
| | | | | JP | 2016010684 | A | 21-01-2016 |
| | | | | KR | 20160001678 | A | 06-01-2016 |
| | | | | PT | 2959808 | T | 04-02-2019 |
| | | | | RU | 2015125522 | A | 10-01-2017 |
| | | | | US | 2015374168 | A1 | 31-12-2015 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160249761 A1
- US 20170290458 A1
- US 20150374168 A1
- EP 0250905 A2
- IT 102010901806672
- IT 102003901114308
- IT 102016000009303
- WO 2014067507 A2
- EP 2146608 A1